# EUROPÄISCHE PATENTSCHRIFT

(11) **EP 0 422 352 B1**
(45) Veröffentlichungstag und Bekanntmachung des Hinweises auf die Patenterteilung: **10.04.1996**
(21) Anmeldenummer: 90115218.1
(22) Anmeldetag: 08.08.1990
(51) Int. Cl.: H04N 9/80, H04N 5/92, H04N 9/81

(54) **Videorecorder zur Aufzeichnung eines Videosignals, welches im Zeitmultiplex Bildinformationen und digitale Zusatzinformationen enthält**
Video recorder for recording a video signal comprising picture information and auxiliary digital information in time-multiplex
Magnétoscope pour l'enregistrement d'un signal video comprenant information d'image et information numérique auxiliaire multiplexés en temps

(30) Priorität: 07.10.1989 DE 3933593
(43) Veröffentlichungstag der Anmeldung: 17.04.1991
(73) Patentinhaber: GRUNDIG E.M.V. Elektro-Mechanische Versuchsanstalt Max Grundig GmbH & Co. KG, D-90762 Fürth (DE)
(72) Erfinder: Opelt, Christian, Grundig E.M.V. Max Grundig, D-8510 Fürth/Bay (DE)

(56) Entgegenhaltungen:
- EP-A- 0 262 362
- EP-A- 0 303 450
- WO-A-87/07809
- GB-A- 2 075 792

## Beschreibung

Die Erfindung betrifft einen Videorecorder zur Aufzeichnung eines Videosignals, welches im Zeitmultiplex Bildinformationen und digitale Zusatzinformationen enthält.

Derartige Videorecorder sind in den europäischen Patentanmeldungen 87111866.7 vom 17.08.87 (veröffentlicht unter EP-A-0 262 362) und 89112523.9 vom 08.07.89 veröffentlicht unter EP-A-0 358 875) beschrieben.

Bei dem aus der europäischen Patentanmeldung EP-A-0 262 362 bekannten Videorecorder wird ein innerhalb jeder Zeile im Zeitmultiplex mit der Bildinformation übertragenes Datenpaket mittels eines Zeittores aus dem Videosignal abgetrennt, zu jedem Datenpaket zusätzlich eine zeitverzögerte Version gebildet, sämtliche Datenpakete einer Mehrpegelcodierung unterworfen und die einer Zeile des Videosignals zugehörigen, mehrfach vorliegenden Informationen nach einer Frequenzmodulation zueinander zeitversetzt auf verschiedenen Schrägspuren eines Magnetbandes aufgezeichnet.

Auch bei dem in der nicht vorveröffentlichten Patentanmeldung EP-A-0358875 beschriebenen Videorecorder wird zu jedem Datenpaket eine zusätzliche Version gebildet. Diese zusätzliche Version eines Datenpaketes wird im Unterschied zur vorgenannten Anmeldung im Zeitmultiplex mit dem Datenpaket und der Bildinformation einer vorherigen Zeile aufgezeichnet. Auch diese Aufzeichnung erfolgt nach vorheriger Frequenzmodulation der Datenpakete.

Bei den vorgenannten Videorecordern kann beim Verlust eines Datenpaketes - beispielsweise aufgrund von Dropouts - die auf einer anderen Schrägspur aufgezeichnete zusätzliche Version dieses Datenpaketes im Sinne einer Dropoutkompensation verwendet werden.

Nachteilig bei den vorgenannten Videorecordern ist jedoch die Notwendigkeit, ein zusätzliches Datenpaket erzeugen und aufzeichnen zu müssen.

Weiterhin ist es aus der Zeitschrift "EBU Review Technical", no. 227, February 1988, Abschnitt 4.4, bekannt, in den vertikalen Austastlücken eines Satelliten-Fernsehsignals sogenannte DATV- ("digitally assisted television") Signale zu übertragen. Diese Signale enthalten im Sender erzeugte Informationen über den Bewegungsinhalt und den Codierungsmodus der übertragenen Fernsehbilder, welche - je nach Bewegungsinhalt - im Sender unterschiedlich codiert werden. Im Empfänger können die übertragenen DATV-Signale zur Wiederherstellung des ursprünglichen Bildes verwendet werden.

Ferner ist in der Zeitschrift "Funkschau", Heft 18, 1989, Seiten 44 bis 48 des Beilage-Teils Funkschau/Spezial, ein HD-MAC-Videorecorder beschrieben. Der genannten Literaturstelle ist zu entnehmen, daß in einem HD-MAC-Signal zu Beginn jeder Zeile digitale Daten und in der vertikalen Austastlücke für die Decodierung des HD-MAC-Signals erforderliche DATV-Daten übertragen werden. Insbesondere ist darauf hingewiesen, daß die Fehlerrate des wiedergegebenen Digitalsignals bestimmte Grenzwerte nicht überschreiten darf, wenn man eine gute Bild- und Tonqualität erhalten will. Es wird deshalb vorgeschlagen, bei der Aufzeichnung der digitalen Daten zusätzliche Fehlerschutzmaßnahmen vorzusehen. Wie dies im einzelnen erfolgt, ist in der genannten Literaturstelle jedoch nicht beschrieben.

Ausgehend vom vorgenannten Stand der Technik liegt der Erfindung die Aufgabe zugrunde, einen Videorecorder mit den im Oberbegriff des Anspruchs 1 angegebenen Merkmalen, wie er aus der europäischen Patentanmeldung 87111866.7 bekannt ist, derart weiterzubilden, daß eine sichere Aufzeichnung und Wiedergabe der digitalen Zusatzinformation gewährleistet ist, ohne daß die Erzeugung und Aufzeichnung einer zusätzlichen Version der digitalen Zusatzinformation notwendig ist.

Diese Aufgabe wird bei einem Videorecorder der im Oberbegriff des Anspruchs 1 angegebenen Art durch die im kennzeichnenden Teil des Anspruchs 1 angegebenen Merkmale gelöst. Vorteilhafte Ausgestaltungen der Erfindung ergeben sich aus den Unteransprüchen.

Die Vorteile der Erfindung bestehen insbesondere darin, daß der von der digitalen Aufzeichnung der digitalen Zusatzinformationen zu treibende Fehlerschutzaufwand an die Bitfehlerrate des Videorecorders und/oder die Bedeutung der jeweiligen digitalen Zusatzinformationen angepaßt werden kann. Da die Verzögerung, der die digitalen Zusatzinformationen im Rahmen der Fehlerschutzprozedur unterworfen sind, durch eine Verzögerung der Bildinformation kompensiert wird, stehen die zur Aufzeichnung gelangenden digitalen Zusatzinformationen wieder in der zeitlich richtigen Beziehung zur Bildinformation. Bei Mehrfachüberspielungen der aufgezeichneten Signale tritt folglich kein zunehmender zeitlicher Versatz zwischen der Bild- und der digitalen Zusatzinformation auf. Zum besseren Verständnis wird darauf hingewiesen, daß die durch die Fehlerschutzprozedur bedingte Erhöhung der Datenquantität durch eine vor der Fehlerschutzprozedur durchgeführte Taktratenerhöhung an das Zeitraster des Videosignals angepaßt wird. Weitere Vorteile der Erfindung ergeben sich aus der Erläuterung von Ausführungsbeispielen anhand der Figuren.

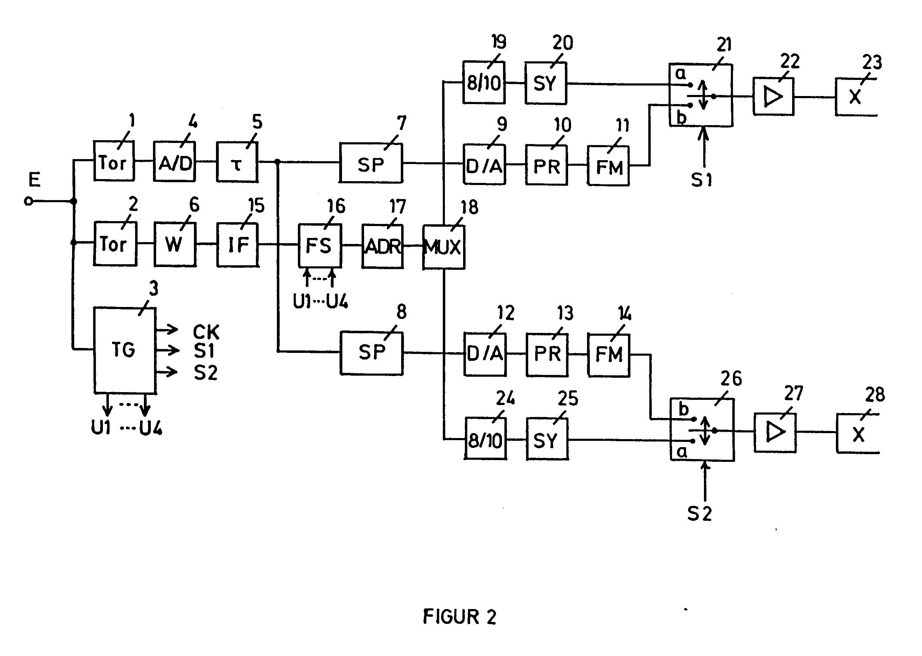

Es zeigen
- Fig. 1
   den Aufbau eines Vollbildes eines HD-MAC-Signals,
- Fig. 2
   ein Blockschaltbild zur Erläuterung der aufzeichnungsseitigen Signalverarbeitung,
- Fig. 3
   ein detailliertes Blockschaltbild des Fehlerschutzcoders 16 von Figur 2,
- Fig. 4 und 5
   Diagramme zur Erläuterung der Funktionsweise der Interface-Schaltung 15 und des Fehlerschutzcoders 16 von Fig. 2 und
- Fig. 6
   ein Blockschaltbild zur Erläuterung der wiedergabeseitigen Signalverarbeitung.

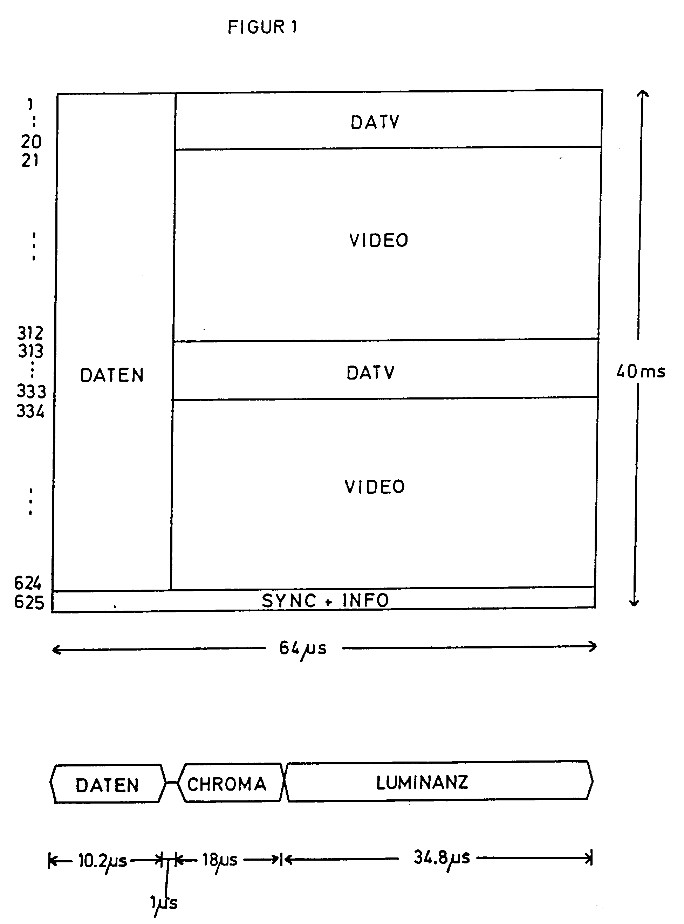

Die Figur 1 zeigt den Aufbau eines Vollbildes eines HD-MAC-Signals. Das gezeigte Vollbild besteht aus 625 Zeilen und hat eine Dauer von 40 ms. In einem ersten Teil jeder der Zeilen 1 bis 624 wird in Duobinärcodierung ein digitaler Datenburst bzw. ein digitales Datenpaket mit beispielsweise jeweils 198 Bit übertragen, welches u.a. eine Toninformation enthält. Im zweiten Teil jeder der Zeilen 1 bis 20 und 313 bis 333 werden ebenfalls in Duobinärcodierung sog. DATV- ("digitally assisted television") Daten übertragen, welche im Sender erzeugte Informationen über den Bewegungsinhalt und den Codierungsmodus der übertragenen Fernsehbilder, welche je nach Bewegungsinhalt im Sender unterschiedlich codiert werden, enthalten. Im zweiten Teil jeder der Zeilen 21 bis 312 und 334 bis 624 wird ein analoges Videosignal übertragen, welches jeweils aus einem Zeitmultiplex von Chrominanz- und Luminanzinformation besteht. Die Zeile 625 des gezeigten Vollbildes enthält in Duobinärcodierung Daten zur Synchronisation und zur Kennzeichnung des HD-MAC-Vollbildsignals, beispielsweise einen Rahmensynchronisationsblock, das Datum und die Zeit, eine Kennzeichnung für den Satellitenkanal und den Aufbau des Paketsignals. Diese in der Zeile 625 übertragenen Informationen enthalten einen Fehlerkorrekturcode bzw. sind durch Mehrfachübertragung gesichert.

Im unteren Teil von Figur 1 ist die Aufteilung der Dauer der Zeilen 21 bis 312 bzw. 334 bis 624 auf die innerhalb dieser Zeilen übertragenen Signalkomponenten gezeigt. Es ist ersichtlich, daß innerhalb jeder der genannten Zeilen ein digitaler Datenburst von 10.2 µs Dauer, eine Klemmlücke von 1 µs Dauer, Chrominanzinformation von 18 µs Dauer sowie Luminanzinformation von 34.8 µs enthalten ist.

Die Figur 2 zeigt ein Blockschaltbild zur Erläuterung die aufzeichnungsseitigen Signalverarbeitung. Dem Eingang E der gezeigten Anordnung wird ein HD-MAC-Videosignal zugeführt, dessen grundsätzlicher Aufbau in Figur 1 beschrieben wirde. Dieses Signal wird einem ersten Zeittor 1 zugeführt, welches die Aufgabe hat, das im zweiten Teil der Zeilen 21 bis 312 und 334 bis 624 übertragene analoge Videosignal und die in der Zeile 625 übertragenen Signale aus dem HD-MAC-Signal abzutrennen. Weiterhin wird das HD-MAC-Eingangssignal einem zweiten Zeittor 2 zugeführt, welches die Aufgabe hat, die im ersten Teil der Zeilen 1 bis 624 und im zweiten Teil der Zeilen 1 bis 20 sowie 313 bis 333 übertragenen digitalen Daten aus dem HD-MAC-Signal abzutrennen. Ferner wird das HD-MAC-Eingangssignal einem Taktgenerator 3 zugeführt, welcher aus dem HD-MAC-Eingangssignal ein Taktsignal CK, Schaltsteuerimpulse S1 und S2 sowie Umschaltsignale U1.....U4 ableitet.

Das im Ausgang des Zeittores 1 zur Verfügung stehende Signal wird in einem Analog/Digital-Wandler 4 in ein digitales Signal umgewandelt und anschließend einer Verzögerungsstufe 5 zugeführt. Die Verzögerungsstufe 5 hat die Aufgabe, diejenige Verzögerung zu kompensieren, der die digitalen Daten im Rahmen der Fehlerschutzprozedur, die unter ausführlicher erläutert wird, unterliegen.

Die aufeinanderfolgenden Zeilen des Ausgangssignals der Verzögerungsstufe 5 werden abwechselnd Speichern 7 und 8 zugeführt und dort zeitexpandiert, wie es aus den eingangs genannten europäischen Patentanmeldungen 87111866.7 und 89112523.9 grundsätzlich bekannt ist. Das Ausgangssignal des Speichers 7 wird in einem Digital/Analog-Wandler 9 in ein analoges Signal rückumgewandelt, in einer Preemphaseschaltung 10 einer Vorverzurrung unterworfen und einem Frequenzmodulator 11 zugeführt. Das frequenzmodulierte Signal wird dem Kontakt b eines Schalters 20 zugeführt. Das Ausgangssignal des Speichers 8 wird in einem Digital/Analog-Wandler 12 in ein analoges Signal rückumgewandelt, in einer Preemphaseschaltung 13 einer Vorverzerrung unterworfen und einem Frequenzmodulator 14 zugeführt. Das frequenzmodulierte Signal wird dem Kontakt b eines Schalters 24 zugeführt.

Die am Ausgang des zweiten Zeittores 2 in duobinärer Codierung zur Verfügung stehenden digitalen Daten werden in einem Wandler 6 in ein binäres Signal umgewandelt. Das binäre Signal wird einer Interface-Schaltung 15 zugeführt. Am ausgang dieser Interface-Schaltung werden die digitalen Daten blockweise mit erhöhter Datenrate zur Verfügung gestellt, so daß innerhalb der zur Übertragung eines Blocks vorgesehenen Zeitdauer Lücken enthalten sind, in die - wie unten beschrieben wird - Prüfworte, Synchronworte und Adreßworte eingesetzt werden.

Hierzu weist die Interface-Schaltung 15 einen nicht gezeichneten Speicher auf, in welchen das binäre Signal mit einer ersten Taktrate in Zeilenrichtung eingeschrieben und mit einer zweiten Taktrate, welche größer ist als die erste Taktrate, in Spaltenrichtung ausgelesen wird. Durch das Auslesen in Spaltenrichtung wird das binäre Signal dem nachfolgenden Fehlerschutzcoder 16 derart zur Verfügung gestellt, daß dessen äußerer Coder 161 - wie unten noch beschrieben wird - das Prüfwort Q bilden kann, ohne daß es einer weiteren Zwischenspeicherung bedarf.

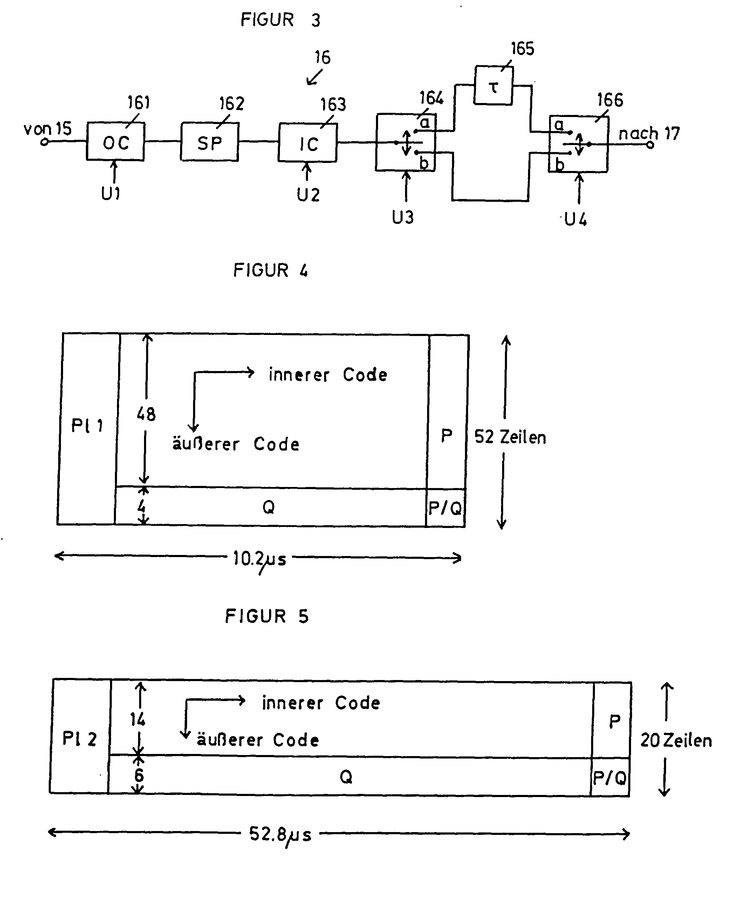

Ein derartiger Datenblock für die im ersten Teil jeder der Zeilen 1 bis 624 übertragenen digitalen Daten ist in der Figur 4 gezeigt. Er umfaßt beispielsweise 52 Zeilen. Die im ersten Teil jeder dieser 52 Zeilen übertragenen digitalen Daten werden durch die vorstehend beschriebene Taktratenwandlung derart zeitlich komprimiert, daß am Anfang jedes Datenblocks Platz Pl 1 für zwei Synchronworte und gegebenenfalls zwei Adreßworte sowie am Ende jedes Datenblocks und in den letzten 4 der 52 Zeilen des Datenblocks Platz für Prüfworte geschaffen wird.

Ein derartiger Datenblock für die im zweiten Teil jeder der Zeilen 1 bis 20 und 313 bis 333 übertragenen DATV-Daten ist in der Figur 5 gezeigt. Er umfaßt beispielsweise 20 Zeilen. Die im zweiten Teil jeder dieser 20 Zeilen übertragenen DATV-Daten werden durch die vorstehend beschriebene Taltratenwandlung derart zeitlich komprimiert, daß am Anfang jedes DATV-Datenblocks Platz Pl 2 für zwei Synchronworte und gegebenenfalls zwei Adreßworte sowie an Ende jedes Datenblocks und in den letzten 6 der 20 Zeilen des DATV-Blocks Platz für Prüfworte geschaffen wird.

Der Aufbau und die Funktionsweise des Fehlerschutzcoders 16, in welchem die in der Interface-Schaltung 15 erzeugten Datenblöcke mit Prüfworten zur Bildung eines Reed-Solomon-Produktcodes versehen werden, ist in der Figur 3 gezeigt. Der gezeigte Fehlerschutzcoder 16 enthält einen äußeren Coder 161, einen Speicher 162, einen inneren Coder 163, einen Schalter 164, eine Verzögerungsschaltung 165 und einen weiteren Schalter 166. Im äußeren Coder 161 wird jede Spalte des in Spaltenrichtung aus dem Speicher der Interface-Schaltung 15 ausgelesenen Datenblockes mit einem ersten Prüfwort Q versehen, welches bei Vorliegen eines DATV-Datenblockes beispielsweise aus 6 Bytes und bei Vorliegen eines Datenblockes aus dem ersten Teil der Zeilen 1 bis 624 aus 4 Bytes besteht. Das so erhaltene Signal wird in Spaltenrichtung in den Speicher 162 eingeschrieben und in Zeilenrichtung wieder aus diesem ausgelesen. Dabei wird jede Zeile des ausgelesenen Signals im inneren Coder 163 mit einem zweiten Prüfwort P versehen, welches beispielsweise aus 4 Bytes besteht. Das Ausgangssignal des inneren Coders 163 wird einem Schalter 164 zugeführt, welcher sich dann, wenn das Ausgangssignal des inneren Coders 163 ein Datenblock aus dem ersten Teil der Zeilen 1 bis 624 des HD-MAC-Signals ist, in der Schaltstellung b befindet, so daß das Ausgangssignal des inneren Coders 163 über den Schalter 164 und den Schalter 166, welcher sich ebenfalls in der Schaltstellung b befindet, dem Ausgang des Fehlerschutzcoders 16 zugeführt wird. Handelt es sich beim Ausgangssignal des inneren Coders 163 hingegen um einen DATV-Datenblock, so wird dieser über den Schalter 164, welcher sich in der Schaltstellung a befindet, die Verzögerungsschaltung 165 und den Schalter 166, welcher sich ebenfalls in der Schaltstellung a befindet, an den Ausgang des Fehlerschutzcoders 16 weitergegeben. Die Verzögerungszeit der Verzögerungsschaltung 165 entspricht der Differenz zwischen denjenigen Verzögerungen, denen die Datenblöcke gemäß Figur 4 und Fig. 5 im Rahmen der Fehlerschutzcodierung unterliegen. Dadurch stehen am Ausgang des Schalters 166 die Datenblöcke wieder zeitrichtig zur Verfügung. Da - wie es vorstehend beschrieben wirde - die Prüfworte P und Q je nachdem, ob der momentan zu verarbeitende Datenblock ein Datenblock aus dem ersten Teil der Zeilen 1 bis 624 oder ein DATV-Datenblock ist, nach einer unterschiedlichen Anzahl von Datenbytes gebildet werden müssen, werden dem äußeren Coder 161 und dem inneren Coder 163 Umschaltsignale U1 bzw. U2 zugeführt, welche die Anzahl der Datenbytes, für die ein Prüfwort erzeugt wird, festlegt. Diese Umschaltsignale werden - wie es in Figur 2 angedeutet ist - im Taktgenerator 3 erzeugt. Auch die zur Umschaltung der Schalter 164 und 166 notwendig Schaltsignale werden im Taktgenerator 3 erzeugt.

Durch die Wahl unterschiedlicher Blockgrößen und Prüfwortlängen für das im ersten Teil der Zeilen übertragene Datenpaket und die DATV-Daten wird den DATV-Daten ein stärkerer Fehlerschutz verliehen als dem im ersten Teil der Zeilen übertragenen Datenpaket. Dadurch wird dem Umstand Rechnung getragen, daß bei einem eventuellen Verlust von DATV-Daten im Aufzeichnungs-Wiedergabekanal die zur Darstellung des wiedergegebenen Signals auf einem Bildschirm notwendige Regenerierung des HD-MAC-Signals wegen der fehlenden Informationen über den Bewegungsinhalt bzw. den Codierungsmodus nicht mehr möglich wäre, da bereits jedes verlorene Byte die Regenerierung unmöglich macht. Im Unterschied hierzu kann verlorene Information im während des ersten Teils der Zeilen übertragenen Datenpaket durch Interpolation verdeckt werden.

Das Ausgangssignal des Fehlerschutzcoders 16 wird eine Adreßsignal-Eintastschaltung 17 zugeführt, in welcher in die am Anfang jeder Zeile jedes Datenblocks geschaffene Lücke zwei Adreßworte eingetastet werden.

An den Ausgang der Adreßsignal-Eintastschaltung 17 ist ein Multiplexer 18 angeschlossen, mittels dessen die Datensignale und Adreßsignale wie folgt auf zwei Aufzeichnungskanäle verteilt werden:

Die ungeradzahligen Bytes werden einem im ersten Aufzeichnungskanal angeordneten 8/10-Kanalcodierer 19 zugeführt, wie er beispielsweise aus der DE-PS 2830924 bekannt ist. In das Ausgangssignal des 8/10-Kanalcodieres 19 wird in einer Synchronworteintastufe 20 in die am Anfang jeder Zeile jedes Datenblocks geschaffene Lücke ferner ein Synchronwort eingetastet. Das Ausgangssignal der Synchronworteintaststufe 20 wird dem Kontakt a des Schalters 21 zugeführt.

Der Schalter 21, welcher mittels des im Taktgenerator 3 erzeugten Schaltsignals S1 in den Zeitintervallen, in denen digitale Daten vorliegen, in die Schaltstellung a gesteuert wird, und in den Zeitintervallen, in denen frequenzmodulierte Signale vorliegen, in die Schaltstellung b gesteuert wird, liefert folglich an seinem Ausgang ein Zeitmultiplexsignal, welches aus mit einem Fehlerschutzcode versehenen digitalen Daten und aus frequenzmodulierten Signalen besteht. Dieses Zeitmultiplexsignal wird in einem Verstärker 22 verstärkt und mittels einer Magnetkopfeinheit 23 aufgezeichnet.

Die geradzahligen Bytes werden einem in zweiten Aufzeichnungskanal angeordneten 8/10-Kanalcodierer 24 zugeführt. In das Ausgangssignal des 8/10-Kanalcodierers 24 wird in einer Synchronworteintaststufe 25 in die am Anfang jeder Zeile jedes Datenblocks geschaffene Lücke ferner ein Synchronwort eingetastet. Das Ausgangssignal der Synchronworteintastestufe 25 wird dem Kontakt a des Schalters 26 zugeführt.

Der Schalter 26, welcher mittels des im Taktgenerator 3 erzeugten Schaltsignals S2 in den Zeitintervallen, in denen digitale Daten vorliegen, in die Schaltstellung a gesteuert wird, und in den Zeitintervallen, in denen frequenzmodulierte Signale vorliegen, in die Schaltstellung b gesteuert wird, liefert folglich an seinem Ausgang ein Zeitmultiplexsignal, welches aus mit einem Fehlerschutzcode versehenen digitalen Daten und aus frequenzmodulierten Signalen besteht. Dieses Zeitmultiplexsignal wird in einem Verstärker 27 verstärkt und mittels einer Magnetkopfeinheit 28 aufgezeichnet.

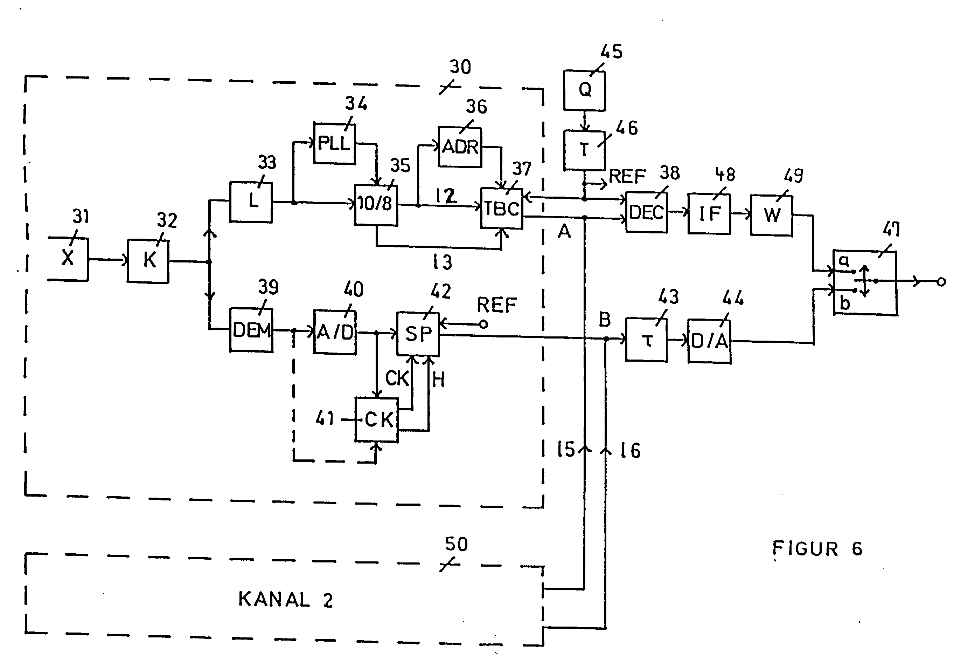

Die Figur 6 zeigt ein Blockschaltbild zur Erläuterung der wiedergabeseitigen Signalverarbeitung. Die von einer im ersten Wiedergabekanal 30 gelegenen Magnetkopfeinheit 31 wiedergegebenen Signale werden in einer Schaltung 32 einer Amplituden- und Phasenkorrektur unterworfen. Das Ausgangssignal der Schaltung 32 wird einem ersten Signalweg zugeführt, in welchem die wiedergegebenen digitalen Daten verarbeitet werden, und einem zweiten Signalweg zugeführt, in welchem das wiedergegebene frequenzmodulierte Signal verarbeitet wird.

Im ersten Signalweg gelangen die wiedergegebenen digitalen Daten zunächst an eine Entscheidungslogik 33, in der dem wiedergegebenen Signal eindeutig "HIGH" bzw. "LOW"-Pegel zugeordnet werden. Aus dem Ausgangssignal der Entscheidungslogik 33 wird mittels einer Frequenz- und Phasenregelschleife 34 aus dem wiedergegebenen Digitalsignal ein Taktsignal regeneriert und einem Kanaldecodierer 35 zugeführt, welchem weiterhin das Ausgangssignal der Entscheidungslogik 33 zugeführt wird. Im Kanaldecodierer 35 wird eine zur aufzeichnungsseitig durchgeführten 8/10-Kanalcodierung inverse Operation durchgeführt. Ferner wird im Kanaldecodierer 35 das aufzeichnungsseitig in das Signal eingefügte Synchronisierwort erkannt und über eine Leitung l 3 einer Schaltung 37 zur Zeitfehlerkorrekktur zugeführt, um die im Aufzeichnungs-/Wiedergabekanal entstandenen Zeitfehler zu kompensieren und um Laufzeitenunterschiede zwischen den beiden Aufzeichnungs-/Wiedergabekanälen auszugleichen. Hierzu erhält die Schaltung 37 ferner über eine Leitung l 2 das Ausgangssignal des Kanaldecodierers 35 sowie ein Referenztaktsignal zugeführt, welches in einem Quarzoszillator 45 erzeugt wird, dessen Ausgangssignal über einen Frequenzteiler 46 geführt wird. Das Ausgangssignal des Zeitfehlerkorrektors 37 wird einem Schaltungsknoten A zugeführt.

Die zwischen dem Kanaldecodierer 35 und dem Zeitfehlerkorrektor 37 angeordnete Adressenerkennungsschaltung 36 ist von Vorteil bei normalem Viedergabebetrieb, wenn größere Störungen auftreten, und beispielsweise beim Schlaufbetrieb, bei dem das Magnetband mit erhöhter Geschwindigkeit transportiert wird und bei dem der Wiedergabekopf mehrere Spuren kreuzt.

In diesen Fällen kann mittels der erkannten Adreßinformation sichergestellt werden, daß die vom Band wiedergegebene Dateninformation an den richtigen Speicherplätzen des Speichers des Zeitfehlerkorrektors 37 abgelegt werden kann.

Im zweiten Signalweg gelangen die wiedergegebenen frequenzmodulierten Signale an einen Frequenzdemodulator 39 und werden dort frequenzdemoduliert. Das frequenzdemodulierte Signal wird in einem Analog-/Digitalwandler 40 in ein digitales Signal umgesetzt. Dieses wird einem Speicher 42 zur Zeitkompression zugeführt. Die zum Einschreiben des digitalen Signals in den Speicher 42 notwendigen Schreibtaktsignale werden in einem Taktsignalgenerator 41 gewonnen, welcher entweder an den Ausgang des Analog-/Digitalwandlers 40 oder den Ausgang des Demodulators 39 angeschlossen ist und aus den ihm zugeführten Signalen Taksignale CK und Zeilensynchronimpulse H erzeugt. Ferner wird dem Speicher 42 das Referenztaktsignal zugeführt, aus welchem das Lesetaktsignal für den Speicher 42 generiert wird. DasAusgangssignal des Speichers 42 wird einem Schaltungsknoten B zugeführt.

An den Schaltungsknoten A werden ferner über eine Signalleitung l 5 die im zweiten Wiedergabekanal 50 verarbeiteten digitalen Daten angelegt, so daß dem mit dem Schaltungsknoten A verbundenen Fehlerschutzdecoder 38 ein Signal zugeführt wird, welches dem am Ausgang des aufzeichnungsseitig angeordneten Fehlerschutzcoders 16 erhaltenen Signal entspricht. Ferner wird dem Fehlerschutzdecoder 38 das Referenztaktsignal zugeführt. Der Fehlerschutzdecoder 38 ist ähnlich aufgebaut wie der in Figur 3 gezeigte Fehlerschutzcoder 16 und wird dazu verwendet, die wiedergegebenen digitalen Daten unter Verwendung der aufzeichnungsseitig generierten Prüfworte auf beim Aufzeichnungs-/Wiedergabevorgang entstandene Fehler zu überprüfen und dieses - soweit möglich - zu korrigieren.

Verwendet man die aufzeichnungsseitig in inneren Coder 163 generierten Prüfworte P ausschließlich zur Fehlererkennung und die im äußeren Coder 161 generierten Prüfworte Q ausschließlich zur Fehlerkorrektur, so wird mittels der gewählten Prüfwortlängen erreicht, daß im Falle von im ersten Teil der Zeilen 1 bis 624 übertragenen Datenpaketen 4 von 52 Bytes zur Fehlerkorrektur zur Verfügung stehen, während im Falle von DATV-Daten 6 von 20 Bytes zur Fehlerkorrektor zur Verfügung stehen.

Das Ausgangssignal das Fehlerschutzdecoders 38 wird einer Interface-Schaltung 48 zugeführt, deren Aufgabe darin besteht, die aufzeichnungsseitige Lückenerzeugung und Taktratenerhöhung wieder rückgängig zu machen. Das Aysgangssignal der Interface-Schaltung 48 wird in einem Binär-/Duobinärwandler 48 wieder in ein duobinäres Signal umgesetzt und an den Kontakt a eines Schalter 47 angelegt.

An den Schaltungsknoten B werden ferner über eine Signalleitung l 6 die im zweiten Wiedergabekanal 50 verarbeiteten frequenzmoduliert aufgezeichneten Signale angelegt, so daß der mit dem Schaltungsknoten B verbundenen Verzögerungsschaltung 43 ein Signal zugeführt wird, welches dem am Ausgang der aufzeichnungsseitig angeordneten Verzögerungsschaltung 5 erhaltenen Signal entspricht. Die Verzögerungsschaltung 43 hat die Aufgabe, die ihr zugeführten Signale derart zu verzögern, daß diejenige Verzögerung, der die digitalen Daten im Rahmen der Fehlerschutzprozedur unterworfen sind, kompensiert wird und damit Videosignal und digitale Daten zeitrichtig zur Verfügung stehen. Das Ausgangssignal der Verzögerungsschaltung 43 wird in einem Digital-/Analog-Wandler 44 in ein analoges Signal rückumgesetzt. Dieses wird dem Kontakt b des Schalters 47 zugeführt.

Der Schalter 47 ist abwechselnd für die am Kontakt a anliegenden digitalen Signale und die am Kontakt b anliegenden Signale durchlässig, so daß am Ausgang des Schalters 47 ein Zeitmultiplexsignal erhalten wird, wie es in Figur 1 gezeigt ist.

## Patentansprüche

1. Videorecorder zur Aufzeichnung eines Videosignals, welches im Zeitmultiplex Bildinformationen und digitale Zusatzinformationen enthält, **gekennzeichnet durch**
-
- einen ersten Signalweg mit:
- einem Zeittor (2) zur Abtrennung der digitalen Zusatzinformationen aus dem Videosignal,
- einer Schaltung (15, 16) zur Erhöhung der Taktrate der abgetrennten digitalen Zusatzinformationen, um zeitliche Lücken für einen Fehlerkorrekturcode zu schaffen und zum Einsetzen des Fehlerkorrekturcodes,
- einem Kanalcodierer (19, 24) zur Kanalcodierung der mit dem Fehlerkorrekturcode versehenen digitalen Zusatzinformationen,
- einem zweiten Signalweg mit:
- einer Verzögerungsstufe (5) für die Bildinformation aus dem Videosignal zur Kompensation der den digitalen Zusatzinformationen im ersten Signalweg auferlegten Verzögerung, und
- einem Frequenzmodulator (11, 14), sowie
- einem mit dem Ausgang des ersten Signalweges und dem Ausgang des zweiten Signalweges verbundenen Schalter (21, 26) zur abwechselnden Weiterleitung der fehlerkorrektur- und kanalcodierten digitalen Zusatzinformationen und der verzögerten, frequenzmodulierten Bildinformation an die Aufzeichnungsköpfe.

2. Videorecorder nach Anspruch 1,
**gekennzeichnet durch**
- eine Interface-Schaltung (15), die - wenn die digitalen Zusatzinformationen die während mehrerer Zeilen der vertikalen Austastlücke eines HD-MAC-Videosignals übertragenen DATV-Daten sind - die DATV-Daten zu einzelnen Datenblöcken zusammenfaßt, welche jeweils die DATV-Daten mehrerer aufeinanderfolgender Zeilen umfaßt,
- einen Fehlerschutzcoder (16) zum Versehen der einzelnen Datenblöcke mit einem zweistufigen Fehlerkorrekturcode, und
- eine Dimensionierung der Verzögerungsstufe (5) derart, daß die der Bildinformation auferlegte Verzögerung in der Größenordnung mehrerer Zeilendauern des HD-MAC-Signals liegt.

3. Videorecorder nach Anspruch 1,
**gekennzeichnet durch**
- eine Interface-Schaltung (15), die - wenn die digitalen Zusatzinformationen die innerhalb der einzelnen Zeilenperioden eines MAC-Signals im Zeitmultiplex mit der Bildinformation übertragenen Datenpakete sind - die Datenpakete mehrerer Zeilen des MAC-Signals zu einzelnen Datenblöcken zusammenfaßt,
- einen Fehlerschutzcoder (16) zum Versehen der einzelnen Datenblöcke mit einem zweistufigen Fehlerkorrekturcode, und
- eine Dimensionierung der Verzögerungsstufe (5) derart, daß die der Bildinformation auferlegte Verzögerung in der Größenordnung mehrerer Zeilendauern des MAC-Signals liegt.

4. Videorecorder nach Anspruch 1,
**gekennzeichnet durch**
- eine Interface-Schaltung (15), die - wenn die digitalen Zusatzinformationen die innerhalb der einzelnen Zeilenperioden eines HD-MAC-Signals im Zeitmultiplex mit der Bildinformation übertragenen Datenpakete und die während mehrerer Zeilen der vertikalen Austastlücke des HD-MAC-Signals übertragenen DATV-Daten sind - die Datenpakete zu ersten Datenblöcken und die DATV-Daten zu zweiten Datenblöcken zusammengefaßt, deren Größe sich von der Größe der ersten Datenblöcke unterscheidet,
- einem Fehlerschutzcoder (16) zum Versehen der ersten Datenblöcke und der zweiten Datenblöcke mit jeweils einem zweistufigen Fehlerkorrekturcode,
- eine Dimensionierung der Verzögerungsstufe (5) derart, daß die der Bildinformation auferlegte Verzögerung in der Größenordnung mehrerer Zeilendauern des HD-MAC-Signals liegt, und
- eine weitere Verzögerungsstufe (165), um die unterschiedlichen Verzögerungen, der die Datenpakete und die DATV-Daten in der Interface-Schaltung (15) und im Fehlerschutzcoder (16) unterliegen, zu kompensieren.

5. Videorecorder nach einem der Ansprüche 2 bis 4,
**dadurch gekennzeichnet,** daß
der zweistufige Fehlerkorrekturcode ein Reed-Solomon-Produktcode ist.

6. Videorecorder nach einem oder mehreren der vorhergehenden Ansprüche,
**dadurch gekennzeichnet,** daß
die digitalen Zusatzinformationen im Kanalcodierer (19, 24) einer 8/10-Kanalcodierung unterworfen werden.

7. Videorecorder zur Wiedergabe eines mit einem Videorecorder nach einem oder mehreren der Ansprüche 1 - 6 aufgezeichneten Signals, welches im Zeitmultiplex frequenzmodulierte Bildinformationen und mit einem Fehlerkorrekturcode und einer Kanalcodierung versehene digitale Zusatzinformationen enthält,
**gekennzeichnet durch**
- einen ersten Signalweg mit:
- einem Kanaldecodierer (35) zur Kanaldecodierung der wiedergegebenen Zusatzinformationen,
- einem Fehlerschutzdecoder (38), der unter Verwendung eines aufzeichnungsseitig erzeugten Fehlerkorrekturcodes die wiedergegebenen Zusatzinformationen überprüft, und
- einer Interfaceschaltung (48) zur Reduzierung der Taktrate der Zusatzinformationen, um eine aufzeichnungsseitige Lückenerzeugung rückgängig zu machen,
- einem zweiten Signalweg mit:
- einem Frequenzdemodulator (39) zur Demodulation der frequenzmoduliert aufgezeichneten Bildinformation,
- einer Verzögerungsstufe (43) für die Bildinformation zur Kompensation der den digitalen Zusatzinformationen im ersten Signalweg auferlegten Verzögerung, und
- einem mit dem Ausgang des ersten Signalweges und dem Ausgang des zweiten Signalweges verbundenen Schalter (47) zur abwechselnden Weiterleitung der Kanal - und fehlerschutzdecodierten und taktratenreduzierten digitalen Zusatzinformationen und der frequenz demodulierten und verzögerten Bildinformation an einen Ausgang.

## Revendications

1. Enregistreur vidéo pour l'enregistrement d'un signal vidéo, qui contient, selon un multiplexage temporel, des informations d'image et des informations supplémentaires numériques, caractérisé par
- une première voie de transmission de signaux comprenant:
- une porte temporelle (2) pour séparer les informations numériques supplémentaires à partir du signal vidéo,
- un circuit (15,16) pour accroître la fréquence de cadence des informations numériques supplémentaires séparées, de manière à créer des intervalles de temps vides pour un code de correction d'erreurs et pour installer le code de correction d'erreurs,
- un codeur de canaux (19,24) pour coder les canaux des informations numériques supplémentaires pourvues du code de correction d'erreurs,
- une seconde voie de transmission de signaux, comportant:
- un étage de retardement (5) pour l'information d'image provenant du signal vidéo pour compenser le retard, qui est appliqué aux informations numériques supplémentaires dans la première voie de transmission de signaux, et
- un modulateur de fréquence (11,14), et
- un commutateur (21,26), qui est relié à la sortie de la première voie de transmission de signaux et à la sortie de la seconde voie de transmission de signaux et sert à retransmettre alternativement les informations numériques supplémentaires codées au moyen d'une correction d'erreurs et au moyen d'un codage de canaux, et les informations d'images raccordées modulées en fréquence, aux têtes d'enregistrement.

2. Enregistreur vidéo selon la revendication 1, caractérisé par
- un circuit d'interface (15), qui - lorsque les informations numériques supplémentaires sont les données DATV transmises pendant plusieurs lignes de l'intervalle de suppression vertical d'un signal vidéo HD-MAC - les données DATV sont rassemblées en blocs individuels qui comportent respectivement les données DATV de plusieurs lignes successives,
- un codeur (16) de protection contre les erreurs pour équiper d'un code de correction d'erreurs à deux étages les différents blocs de données, et
- un dimensionnement de l'étage de retardement (5) de sorte que le retard appliqué à l'information d'image est de l'ordre de grandeur de plusieurs durées de lignes du signal HD-MAC.

3. Enregistreur vidéo selon la revendication 1, caractérisé par
- un circuit d'interface (15), qui - lorsque les informations numériques supplémentaires sont les paquets de données transmis à l'intérieur des périodes individuelles de lignes d'un signal MAC dans le multiplexage temporel, avec l'information d'image - les paquets de données de plusieurs lignes du signal MAC sont réunis pour former des blocs individuels de données,
- un décodeur (16) de protection contre les erreurs pour équiper d'un code de correction d'erreurs à deux étages les différents blocs de données, et
- un dimensionnement de l'étage de retardement (5) de sorte que le retard appliqué à l'information d'image est de l'ordre de grandeur de plusieurs durées de lignes du signal MAC.

4. Enregistreur vidéo selon la revendication 1, caractérisé par
- un circuit d'interface (15), qui - lorsque les informations numériques supplémentaires sont les paquets de données transmis pendant les différentes périodes de lignes d'un signal HD-MAC et pendant le multiplexage temporel avec l'information d'image, et les données DTAV transmises pendant plusieurs lignes de l'intervalle de suppression vertical du signal HD-MAC - les paquets de données sont rassemblés pour former des premiers blocs de données et les données DATV sont rassemblées pour former des seconds blocs de données, dont la taille diffère de la taille des premiers blocs de données,
- un décodeur (16) de protection contre les erreurs pour équiper respectivement d'un code de correction d'erreurs à deux étages les premiers blocs de données et les seconds blocs de données,
- un dimensionnement de l'étage de retardement (5) de telle sorte que le retard appliqué à l'information d'image est de l'ordre de grandeur de plusieurs durées de lignes du signal HD-MAC, et
- un autre étage de retardement (165) servant à compenser les différents retards, auquel les paquets de données et les données DATV sont soumis dans le circuit d'interface (15) et dans le codeur (16) de protection contre les erreurs.

5. Enregistreur vidéo selon l'une des revendications 2 à 4, caractérisé en ce que le code de protection contre les erreurs, à deux étages, est un code de produit Reed-Solomon.

6. Enregistreur vidéo selon une ou plusieurs des revendications précédentes, caractérisé en ce que les informations numériques supplémentaires sont soumises, dans le codeur de canaux (19,24), à un codage de canaux 8/10.

7. Enregistreur vidéo pour la reproduction d'un signal enregistré avec un enregistreur vidéo selon une ou plusieurs des revendications 1-6, qui contient, dans le multiplexage temporel, des informations d'image modulées en fréquence et des informations numériques supplémentaires, pourvues d'un code de correction d'erreurs et d'un codage de canaux,
caractérisé par
- un premier trajet de transmission de signaux comprenant:
- un décodeur de canaux (35) pour le décodage des canaux des informations supplémentaires reproduites,
- un décodeur (38) de protection contre les erreurs, qui, en utilisant un code de correction d'erreurs produit côté enregistrement, contrôle les informations supplémentaires reproduites, et
- un circuit d'interface (48) pour réduire la fréquence de cadence des informations supplémentaires afin d'annuler une production d'espaces vides, exécutée sur le côté enregistrement,
- un second trajet de transmission de signaux comprenant :
- un démodulateur de fréquence (39) pour démoduler l'information d'image enregistrée d'une manière modulée en fréquence,
- un étage de retardement (43) pour l'information d'image, pour compenser le retard appliqué aux informations numériques supplémentaires dans le premier trajet de transmission de signaux, et
- un commutateur (47) qui est relié à la sortie du premier trajet de transmission de signaux et à la sortie du second trajet de transmission de signaux, pour retransmettre alternativement les informations numériques supplémentaires décodées avec un décodage de canaux et de protection contre les erreurs, et dont les fréquences de cadence sont réduites, et l'information d'image démodulée en fréquence et retardée, à une sortie.

## Claims

1. A video recorder for the recording of a video signal which contains, in time division multiplex, items of picture information and items of additional digital information, characterised by
- a first signal path with:
- a time gate (2) for the separation of the items of additional digital information out of the video signal,
- a circuit (15, 16) for increasing the clock rate of the separated items of additional digital information in order to provide time gaps for an error correction code and for the insertion of the error correction code,
- a channel coder (19, 24) for the channel coding of the items of additional digital information provided with the error correction code,
- a second signal path with:
- a delay stage (5) for the picture information from the video signal for the compensation of the delay imposed upon the items of additional digital information in the first signal path and
- a frequency modulator (11, 14) as well as
- a switch (21, 26), connected to the output of the first signal path and to the output of the second signal path, for alternate forwarding of the error-correctioncoded and channel-coded items of additional digital information and of the delayed, frequency-modulated picture information to the recording heads.

2. A video recorder as claimed in Claim 1, characterised by
- an interface circuit (15) which - when the items of additional digital information are the DATV data transmitted during a plurality of lines of the vertical blanking interval of a HD-MAC video signal - combines the DATV data to form individual data blocks which in each case comprise the DATV data of a plurality of consecutive lines,
- an error protection coder (16) for providing the individual data blocks with a two-stage error correction code and
- dimensioning of the delay stage (5) such that the delay imposed upon the picture information is in the order of several line durations of the HD-MAC signal.

3. A video recorder as claimed in Claim 1, characterised by
- an interface circuit (15) which - when the items of additional digital information are the data packets transmitted within the individual line periods of a MAC signal in time division multiplex with the picture information - combines the data packets of a plurality of lines of the MAC signal to form individual data blocks,
- an error protection coder (16) for providing the individual data blocks with a two-stage error correction code and
- dimensioning of the delay stage (5) such that the delay imposed upon the picture information is in the order of magnitude of a plurality of line durations of the MAC signal.

4. A video recorder as claimed in Claim 1, characterised by
- an interface circuit (15) which - when the items of additional digital information are the data packets transmitted within the individual line periods of a HD-MAC signal in time division multiplex with the picture information and the DATV data transmitted during a plurality of lines of the vertical blanking interval of the HD-MAC signal - combines the data packets to form first data blocks and combines the DATV data to form second data blocks, the size of which differs from the size of the first blocks,
- an error protection coder (16) for providing the first data blocks and the second data blocks in each case with a two-stage error correction code,
- dimensioning of the delay stage (5) such that the delay imposed upon the picture information is in the order of a plurality of line durations of the MD-MAC signal and
- a further delay stage (165) in order to compensate the different delays to which the data packets and the DATV data are subject in the interface circuit (15) and in the error protection coder (16).

5. A video recorder as claimed in one of Claims 2 to 4, characterised in that the two-stage error correction code is a Reed-Solomon product code.

6. A video recorder as claimed in one or several of the preceding claims, characterised in that the items of additional digital information are subjected to 8/10 channel coding in the channel coder (19, 24).

7. A video recorder for the reproduction of a signal recorded with a video recorder in accordance with one or several of Claims 1-6, which signal contains, in time division multiplex, frequency-modulated items of picture information and items of additional digital information provided with an error correction code and channel coding,
characterised by
- a first signal path with:
- a channel decoder (35) for the channel decoding of the reproduced items of additional information,
- an error protection decoder (38) which, using an error correction code generated at the recording end, checks the reproduced items of additional information and
- an interface circuit (48) for reducing the clock rate of the items of additional information in order to cancel the gap generated at the recording end, and
- a second signal path with:
- a frequency demodulator (39) for the demodulation of the picture information recorded in frequency-modulated fashion,
- a delay stage (43) for the picture information for the compensation of the delay imposed upon the items of additional digital information in the first signal path and
- a switch (47), connected to the output of the first signal path and to the output of the second signal path, for alternate forwarding of the channel-decoded and error-protection-decoded and clock-rate-reduced items of additional digital information and of the frequency-demodulated- and delayed picture information to an output.
